# EUROPEAN PATENT SPECIFICATION

(11) **EP 1 653 639 B1**
(45) Date of publication and mention of the grant of the patent: **09.11.2011**
(21) Application number: 03782047.9
(22) Date of filing: 05.12.2003
(51) Int. Cl.: H04B 10/00, H04Q 11/00

(54) **SIGNALLING ROUTING APPARATUS AND METHOD IN OPTICAL NETWORK**
ZEICHENGABE-LEITWEGLENKVORRICHTUNG UND -VERFAHREN IN EINEM OPTISCHEN NETZ
APPAREIL ET PROCEDE D'ACHEMINEMENT DE LA SIGNALISATION DANS UN RESEAU OPTIQUE

(30) Priority: 16.07.2003 CN 03139901
(43) Date of publication of application: 03.05.2006
(73) Proprietor: ZTE Corporation, 518057 Shenzhen City, Guangdong Province (CN)
(72) Inventor: MA, Heng, ZTE Plaza, Keji Road South, 518057 Shenzhen, Guangdong (CN); GAO, Feng, ZTE Plaza, Keji Road South, 518057 Shenzhen, Guangdong (CN); LIU, Jianguo, ZTE Plaza, Keji Road South, 518057 Shenzhen, Guangdong (CN)
(74) Representative: Camp, Ronald
(86) International application number: PCT/CN2003/001040
(87) International publication number: WO 2005/008922

(56) References cited:
- EP-A- 1 152 631
- WO-A1-03/045019
- US-A- 5 754 547
- US-A1- 2002 018 269
- US-A1- 2003 035 166
- LIU H ET AL: "GMPLS-BASED CONTROL PLANE FOR OPTICAL NETWORKS: EARLY IMPLEMENTATION EXPERIENCE" PROCEEDINGS OF THE SPIE, SPIE, BELLINGHAM, VA, US, vol. 4872, 29 July 2002 (2002-07-29), pages 220-229, XP001174200 ISSN: 0277-786X
- SATO K ET AL: "GMPLS-BASED PHOTONIC MULTILAYER ROUTER (HIKARI ROUTER) ARCHITECTURE: AN OVERVIEW OF TRAFFIC ENGINEERING AND SIGNALING TECHNOLOGY" IEEE COMMUNICATIONS MAGAZINE, IEEE SERVICE CENTER,NEW YORK, NY, US, vol. 40, no. 3, March 2002 (2002-03), pages 96-101, XP001102611 ISSN: 0163-6804
- BENJAMIN D ET AL: "OPTICAL SERVICES OVER THE INTELLIGENT OPTICAL NETWORK" IEEE COMMUNICATIONS MAGAZINE, IEEE SERVICE CENTER,NEW YORK, NY, US, vol. 39, no. 9, September 2001 (2001-09), pages 73-78, XP001107752 ISSN: 0163-6804

## Description

### Technical Field of the Invention

The present invention relates to the field of optical communication, in particular, to the apparatus and method of transmitting signaling information in an optical network by using packet switched technology.

### Background of the Invention

In the modern optical network (e.g. G.8080 standard), the transport network is divided into three independent planes, that is, transport plane, control plane and management plane. Also, there is a relatively independent signaling network in the network to provide signaling communication support, the signaling network defines a signaling transmission protocol for interworking, and is responsible for passing signaling information among the control planes of respective node devices in the optical network.

Typically, in the Optical Transport Network (OTN) and Synchronous Digital Hierarchy/ Synchronous Optical Network (SDH/SONET), an ECC channel is used to transport the signaling information between control planes and the network management information between network management planes.

In a Dense Wavelength Division Multiplexing (DWDM) system, generally, an Optical Supervisory Channel (OSC) is used to transfer the communication control signaling. Each OSC channel uses one primary group, and each primary group is divided into 32 time slots. Within the 32 time slots of the primary group, several fixed time slots are assigned as Data Communication Channel (DCC), the communication control signaling is multiplexed to the Data Communication Channel (DCC) through time division multiplex, and the DWDM devices of other nodes in the DWDM network de-multiplex the communication control signaling information from the DCC. As the network structure and network element structure of the optical network becomes increasingly complex and the traffic carried on the network increases rapidly, the capacity of the primary group is insufficient to meet the requirement, currently, there is provided a solution that the OSC channel will use SDH/SONET signal (for example, STM-1 signal).

In the DWDM system, the solution of transferring communication control signaling through OSC channel using the SDH/SONET signal also has an obvious shortcoming, which is as follows: a signaling network made up of SDH/SONET signal belongs to a synchronous network, while the DWDM network itself does not require the transmission of signaling to be synchronous, which will obviously increase the complexity of the network technology and the probability to failure; moreover, while a signaling network made up of SDH/SONET signal itself has relatively perfect protection mechanism, it needs to be provided a large amount of additional resource, which increase the complexity and cost of networking.

On the other hand, there is a variety of hardware environment that can be used by a signaling network, if the network underlying technology is defined very strictly, it is disadvantage for the interconnection and interworking of the signaling network. Therefore, ITU-T has suggested in G.7712 that the signaling network link support various interface implementations, including WAN interface, LAN interface and ECC interface, and support interworking of IP/OSI network layer protocol at network layer.

This connectionless-orientated network has following features: a host can send a packet at anytime, and an intermediate node (or router) can forward the packet immediately. When sending the packet, the host does not know whether the network can forward that packet or whether the destination host can receive that packet. Each packet is independent of other packets, even if the destinations of these packets are the same. When a failure occurs at the intermediate node or link, it is possible to find an alternate path at the point of failure and correspondingly update the forwarding table.

The process to forward a data packet is as follows: the data packet is sent from a source host to a target host and may pass several routers on the way. Any node, whether it is a host or a router, first verifies if it is within a same physical network with the target host. Typically, the network portion of the target address is compared with that of each local interface, if match, the data packet is transmitted directly. Otherwise, a router that is best or considered as nearest to the target is selected, then the selected next hop router queries the forwarding table with <network number, next hop> and performs hop-by-hop forwarding. Generally, a default router can also be set, which can be used when all the records on the forwarding table do not match. This kind of IP route forwarding is a local route table based forwarding mechanism, the hop-by-hop forwarding can only form one route between a source terminal and a target terminal, and this kind of connectionless-orientated signaling transmission manner is not so reliable.

During the above-described packet forwarding, any one of the intermediate nodes can cause the data packet to be lost due to network's underlying failure or the overflow of process buffer etc., while this kind of lost event can only be found when detection mechanism is added on higher network layer, this will take a relatively long time. Generally, a node relies on the 'hello' shake-hands mechanism of the route protocol to find the route failure, if confirmation time is added, it will take time in second level or even more time.

US 2002/018269 A1 (DHAUDHURI SID ET AL, 14 February 2002), discloses a method and system for lightpath provisioning in a reconfigurable optical network. The method comprises the steps of naming each network addressable element in reconfigurable optical network, determining current resources therein, determining current topology therein, requesting establishment of a lightpath, and allocating the lightpath.

Therefore, although this connectionless-orientated route/switch technology is flexible and easy to implement, it is hard to meet the reliability requirement of the transport network for signaling transmission, especially under the failure condition, the requirement to transport signaling fast and steadily.

### Summary of the Invention

The technical problem to be solved by the present invention is to provide an apparatus and method for routing signaling in an optical network, which can form a uniform optical network signaling control platform in the optical network, transmit the signaling more reliably and implement concurrent priority receiving of the signaling, improve the invulnerability of communication between network element devices of the network.

The main idea of the present invention is: building a uniform optical network signaling control platform based on packet switched technology; generating an explicit route table in any control nodes, the signaling between respective control nodes in the network is transported in the form of packet switched data packet at network layer according to the explicit route table; producing a concurrent signaling data packet at source control node; and selecting a signaling data packet at destination control node.

According to one aspect of the invention, an apparatus for routing signaling information in an optical network of the invention comprises a signaling route maintaining unit, a signaling packet switching unit and a control node interface;
said signaling route maintaining unit is operable
- for maintaining link state information of the network,
- for monitoring a link,
- for spreading network topology information,
- for updating the network topology information,
- for calculating explicit routes to form an explicit route table, wherein the explicit route table records at least two explicit routes with minimum link dependency between any two of the control nodes, and
- for forming signaling information data packets according to each explicit route;
said signaling packet switching unit is operable
- for resolving each explicit route of a signaling information data packet,
- for looking up a mapping relationship of a route port according to the explicit route, and
- for forwarding the signaling information data packet to the route port based on the explicit route;
said control node interface is operable
- for sending concurrent signaling information generated at a source control node to said signaling route maintaining unit to form concurrent signaling information data packets,
- for receiving signaling information data packets from a signaling packet switching unit of another apparatus for routing signaling information,
- for selecting a signaling information data packet according to a receiving condition, and
- for sending the selected signaling information data packet to a destination control node for processing.

According to another aspect of the invention, an optical network comprises a transport plane, a control plane and a management plane; wherein
said transport plane comprises a plurality of network element devices and is configured to provide unidirectional or bi-directional transportation of end-to-end user information;
said control plane comprises a plurality of control nodes, and said control nodes are configured to control signaling information and routing of corresponding transport plane and perform operations of establishing and deleting connection;
said control node further comprises therein an apparatus for routing signaling information according to any one of claims 1 to 7, wherein
the apparatus for routing signaling information provides transport channel of signaling information for the control node and is configured to calculate explicit route and perform packet forwarding for communication signaling information; and the apparatus for routing signaling information within said control nodes form a signaling control platform, and the signaling information between said control nodes is transported in the form of signaling information data packet.

Another aspect of the invention provides a method for routing signaling information in an optical network of the invention, each control node of said optical network being provided with an apparatus for routing signaling information which forms an independent signaling network, and said method comprises the steps of:
step 1, obtaining link state information between control nodes and spreading the link state information to each control node;
step 2, calculating at a source control node at least two explicit routes with minimum link dependency between any two of the control nodes;
step 3, packing, by the source control node, the signaling information to be transported into at least two signaling information data packets simultaneously based on the explicit routes and sending the signaling information data packets out according to different routes;
step 4, after receiving the signaling information data packets, looking up, by an intermediate control node, corresponding output port based on the explicit routes carried by the signaling information data packets, and forwarding the signaling information data packets to the output port;
step 5, selecting, by a destination control node, one of the signaling information data packets based on receiving condition of the signaling information data packets, discarding duplicated signaling information data packet, and solving out the signaling information within the signaling information data packet.

The apparatus and method of the invention solves the technical problem that the control platform in the prior art has poor compatibility, expansibility and invulnerability, in contrast to transmit communication control signaling by using ECC channel and the general IP data packet signaling network, it has following effects: the present invention conforms to the signaling control platform standard (G.7712 signaling communication network standard) of the current transport network, which facilitates interworking of signaling network with different manufacture's devices at network layer; also, diversity route explicit route (source route) packet switching is employed to replace the former route table switching, which improves the invulnerability of network transportation. The present invention utilizes the technology of concurrent priority receiving of the data packets, improves the invulnerability of the signaling to single point or limited multipoint (haven't influenced all the routes simultaneously) failure, saves the protection switching time of the signaling and ensures the performance of Mesh network protection and restoration switching. When the topology of the signaling network has changed, the backup route can still ensure that the signaling packet be transmitted steadily, which has prevented from relying on real-time dynamical routing algorithm (for example, OSPF, BGP, IS-IS) to solve backup route, thereby solves the problem that the convergence is slow. The improved diversity route selecting algorithm employed by the invention can rapidly obtain multiple explicit routes with minimum link dependency, which conveniently realizes the obtaining of the explicit route. When a connection failure is found, after self-healing the topology, the signaling network can re-select a route at background to replace the corrupted route, which dynamically realizes the backup of the route. The apparatus for routing signaling of the invention only needs to add features of source calculation, multiple explicit routes and explicit route forwarding that conforms to IP routing standard on the original router protocol, which dose not affect forwarding feature of the traditional router. The traditional router only needs to support explicit route forwarding according to the IP routing standard specification, it is easy to connect the apparatus for routing signaling of the invention to an IP/OSI signaling network that is formed by conventional routers, the source and destination control nodes only need to function as a border node and the node of conventional routers just perform transparent forwarding directly. The present invention is also applicable to other data communication network that has highly reliable requirement to signaling transmission.

### Brief Description of the Drawings

Fig 1 is a structure diagram of the apparatus for routing signaling of the invention;
Fig 2 is a diagram of the optical network that is formed by the apparatus for routing signaling of the invention;
Fig 3 is a flowchart of the method of the invention;
Fig 4 is a flowchart of calculating explicit route in the method of the invention;
Fig 5 is a topology diagram for calculating explicit route of the network shown in Fig 2;
Fig 6 is a topology diagram for calculating explicit route of a topology limited signaling network.

### Detailed Description of the Preferred Embodiments

Next, the technical solution of the invention will be described in further detail in conjunction with accompany drawings and embodiments.

The core idea of the invention is to transmit signaling in the form of packet switched data packet (may include, but not limited to, an IP packet) between network element devices in an optical network system, a signaling routing means is set in the control node of each network element device as a control platform for communication signaling, the signaling routing means calculates explicit route of the communication signaling and performs packet forwarding. Unlike typical router's route table forwarding, the route forwarding realized by the invention determines the forwarding port by relying on source node calculation and the explicit route carried in the data packet.

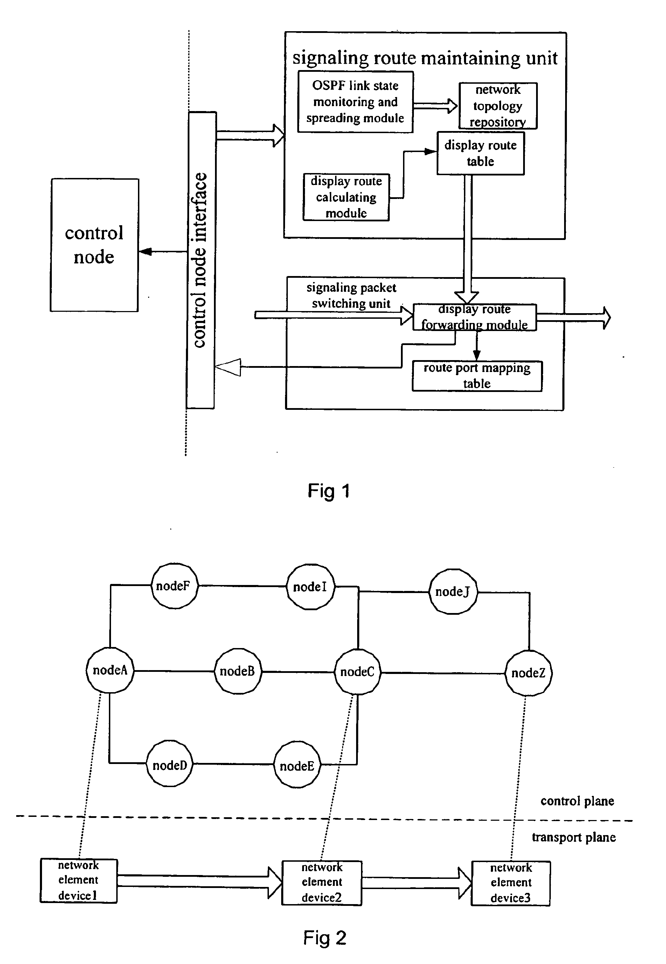

The signaling routing means of the invention is shown in Fig 1, it includes a signaling route maintaining unit, a signaling packet switching unit and a control node interface. The signaling route maintaining unit includes a link state monitoring and spreading module, a network topology repository, an explicit route calculating module and an explicit route table. Wherein the link state monitoring and spreading module is responsible for maintaining the link state of the network, monitoring network link, spreading network topology information, updating network topology and writing the network topology into the network topology repository; the explicit route calculating module calculates explicit route and writes the calculated route result into the explicit route table, the module can utilize various link state protocols, OSPF link state protocol is used in the present embodiment. The signaling packet switching unit includes an explicit route forwarding module and a route port mapping table, the explicit route forwarding module is responsible for resolving route of a signaling data packet, looking up route port mapping table and forwarding the signaling data packet. The control node interface, as an interface to the control nodes, is responsible for producing a set of concurrent signaling data packets at source control node, selecting a signaling data packet based on the receiving condition at the destination end and handing it to the control node service side for processing.

When a control node needs to send a signaling, it generates signaling data and request via the control node interface and sends them to the signaling route maintaining unit, the signaling route maintaining unit takes out destination explicit route that needs to be transmitted from the explicit route table, packs the signaling data as an IP data packet and hands it to the signaling packet switching unit to perform forwarding. The signaling packet switching unit extracts a local next hop address from the explicit route table, then queries the corresponding output port and sends out the data packet. When the signaling packet switching unit of the next hop receives the data packet, it continues to extract next hop address, then queries the corresponding output port and sends out the data packet, until the signaling packet switching unit of a subsequent next hop finds that the destination address is a local address, then the data packet is handed over to the local control node interface to perform priority receiving and is handed to the control node for processing.

The signaling routing means are set in the control node of each network element device in the optical network system and form a uniform signaling control platform to calculate explicit route for the communication signaling and perform packet forwarding.

Fig 2 is a diagram of an optical network that is formed by using the means shown in Fig 1, wherein the transport plane (transport network) is separated from the control plane (signaling network), the transport plane consists 3 network element devices, and the control plane includes control nodes A, B, C, D, E, F, I, J and Z, the network element device 1 corresponds to control node A, the network element device 2 corresponds to control node C, and the network element device 3 corresponds to control node Z. The transport plane of the network element device can be various Optical Transport Network (OTN) or SDH transport device. Each control node contains therein the signaling routing means shown in Fig 1 to realize the signaling routing function of the control plane; other functional modules will process signaling functions at control plane service level. The signaling routing means of each control node form the signaling transmitting portion of the control node of the optical network. The signaling data packets between control nodes are forwarded between control nodes of the network element devices via the signaling routing means.

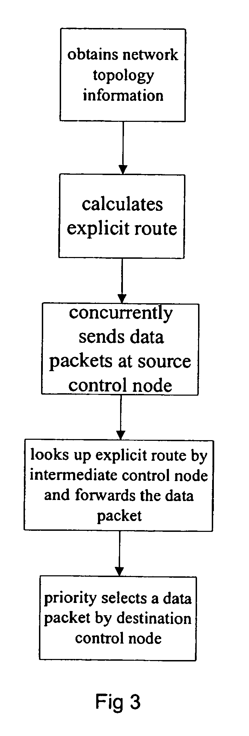

The flowchart of realizing transportation of signaling in the form of data packet in the optical network shown in Fig 2 is shown in Fig 3. Firstly, route topology information needs to be obtained. Each control node is provided with a signaling routing means therein and is configured with a unique communication address of the signaling network, thus, an independent packet switched signaling network is built in the entire optical network. The list of control node and adjacent control node (including link overhead between nodes) is configured through an interface (may include, but not limited to, a command line interface, a simple graphical interface), or can be configured by using the auto-discovering feature. Then, the above link state information is spread to each control node in the network by using the link state protocol so that each control node can built a full signaling network image, i.e., network topology.

Then, the source control node calculates the explicit route between itself and any one of the control nodes and saves it in the source control node, such that each control node can function as a potential source control node to calculate and preserve the explicit route. In order to improve the invulnerability of the network, it is needed in the invention to calculate at least two routes with minimum link dependency between any two of the control nodes, and there should be as least as possible overlapping intermediate nodes and links between each route. The obtained explicit route is calculated to form an explicit route table and saves it in the source control node; the explicit route table records at least two routes with minimum link dependency between any node and each other node in the network. The format of an ordinary route table generally is <destination, overhead, next hop point> and the table is recorded in each forwarding node; while the format of an explicit route table generally is <source, next hop point, next hop point, ..., destination, overhead> and the table only needs to be recorded in the source control node. For an explicit route table between same source and destination nodes, the next hop point therein should, to the extent possible, not overlap, so as to ensure that the link dependency of the route is the lowest.

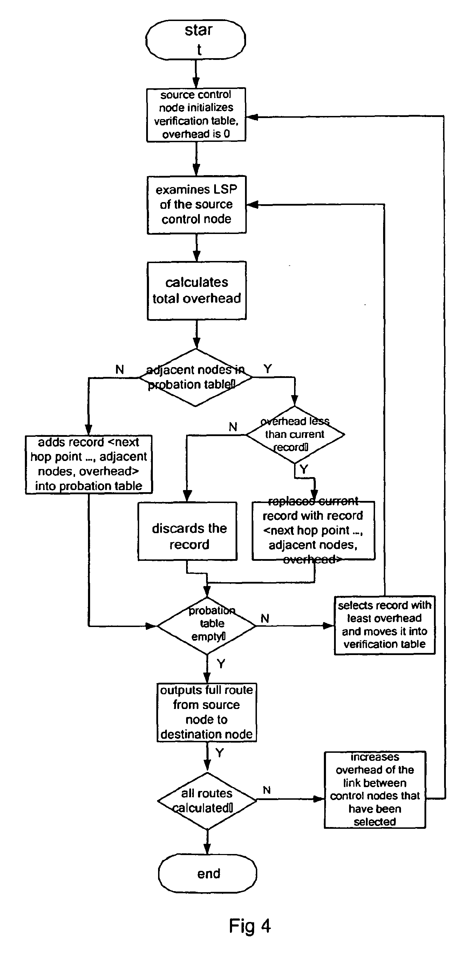

A diversity route algorithm or a route algorithm with constraint can be employed to calculate explicit route. The present invention has presented an improved Dijkstra algorithm, as shown in Fig 4. Each source control node that has signaling to send uses a search forward Dijkstra algorithm or other constrained route algorithms, and calculate explicit route from the network topology collected from the Link State Packet (LSP) gathered by that control node, two tables are involved in the calculation: a probation table and a verification table, the former records the candidate paths and overheads during calculating the shortest path, the latter records the verified shortest path and overhead from the current source to one next hop node. Each table has a plurality of route records therein, the format of which is <next hop point, ...destination, overhead>, two explicit routes are obtained by performing search and calculation twice, when local node is a source control node, the final verification table just records therein the routing addresses of all the control nodes that have been passed between the source and the potential destination control node. Specifically, the steps are: a source control node initializes the verification table, wherein the link overhead is 0. The node that has been newly added into the verification table is called a Next node, the Link State Packet (LSP) of the source control node is examined. The total overhead from the source control node to the Next node and from the Next node to the adjacent nodes is calculated. Then, it is determined whether the adjacent nodes are in the probation table, if so, then it is further determined whether the above overhead is lower than the current record in the probation table, if Yes, then the current record is replaced by the record <next hop point..., adjacent nodes, overhead>; if the overhead is not less than the current record, then the current record is preserved and the new record is discarded. If the adjacent nodes are not in the probation table, then the record <next hop point..., adjacent nodes, overhead> is added into the probation table, note that at this time, every record contains all the nodes that have been passed. At this time, it is determined whether the probation table is empty, if not, then the record with least overhead in the probation table is selected and moved into the verification table, then returns (loops) to continue to examine the Link State Packet (LSP); if the probation table is empty, then the full route from the source control node to the destination control node is outputted. At this time, it is determined whether all the routes have been calculated, if so, the process to calculate explicit route is ended, if not, the overhead of the link between the control nodes that have been selected is increased, then the source control node re-initializes the verification table, calculates the corresponding second route until all the second routes have been obtained. It should be pointed out that if the intermediate control node just performs forwarding, it will not be taken as a potential source node, so the calculation of the above two routes may not be performed.

After obtaining the explicit route table, the source control node performs concurrent sending of signaling data packets. The signaling routing means in the source control node packs the signaling information to be transferred into data packet, generates two data packets that have same signaling content but have different header content, the header contains therein different explicit routes, the data field of which has different identifier (ID), the identifier (ID) is denoted as (X, Y1) and (X, Y2), wherein X represents the sequence number of the data packet, it may be a serial number; Y1, Y2 represents the first and second portion of a same data packet X. The packed signaling information is sent out according to different explicit routes.

After the signaling routing means in the intermediate control node receives the signaling data packet, it performs switching and forwarding based on the explicit route carried by the header of the data packet. Each output port of each control node has a number, the explicit route and the output port of the device are mapped to each other, thus, the corresponding output port can be looked up according to the explicit route carried by the data packet, then the data packet is forwarded to the corresponding output port.

Specifically, the process to forward the data packet is: the header address field of the signaling data packet carries therewith the explicit route calculated by the source control node, begin from the source control node, the signaling routing means of each control node that has received a data packet queries the explicit route of the header of the data packet. If what is indicated by the current address is not a destination address, i.e., the current control node is not a destination control node, then it is mapped to a corresponding output port based on the address of the next hop point indicated in the explicit route and sends the data packet out, at the same time, the address of the next hop point that indicates the current control node is moved by one pointer position, the pointer is set in one field of the header. Since there may be several hops of control nodes to perform forwarding in the path from the source control node to the destination control node, the header of the data packet needs to contain sufficient explicit route information, so that each control node in the path can determine output port for forwarding based on the explicit route information.

After forwarded by the intermediate control nodes, the signaling data packet arrives the destination control node. When the signaling routing means of the destination control node receives the data packet, it selects a data packet in accordance with a predefined policy based on the identifier (ID) carried by that data packet, the policy can be a policy which selects data packet with good quality, for example, do not have error code, or can be a policy which selects data packet that arrives first based on the sequence of arrival, then discards the duplicated data packet. Thus, even if a failure occurs on the node or link that has been passed by any one of the two routes, or the data packet is lost due to buffer overflow, the transmission of signaling will not be affected.

Next, the network shown in Fig 2 is taken as an embodiment to describe the present invention in detail, the data packet of the signaling data takes the form of an IP packet. The signaling routing means in respective control nodes of the network spreads the state of the links between respective nodes into all the signaling routing means in the network by using the OSPF routing protocol based on the neighbor relationship between point-to-point configured by the network administrator, and automatically generates the topology diagram of the signaling network of the control plane. When a physical connection needs to be established between network element device 1 and network element device 3, first a connection needs to be established between network element device 1 and network element device 2. As shown, network element device 1 corresponds to control node A, and network element device 2 corresponds to control node C. Before transmission of signaling is performed between control node A and control node C for the first time, two explicit routes with minimum link dependency from control node A to control node C need to be calculated first. A diversity route selecting algorithm or a constraint routing algorithm may be employed to calculate two link independent source routes: A-B-C and A-D-E-C, and they will be recorded.

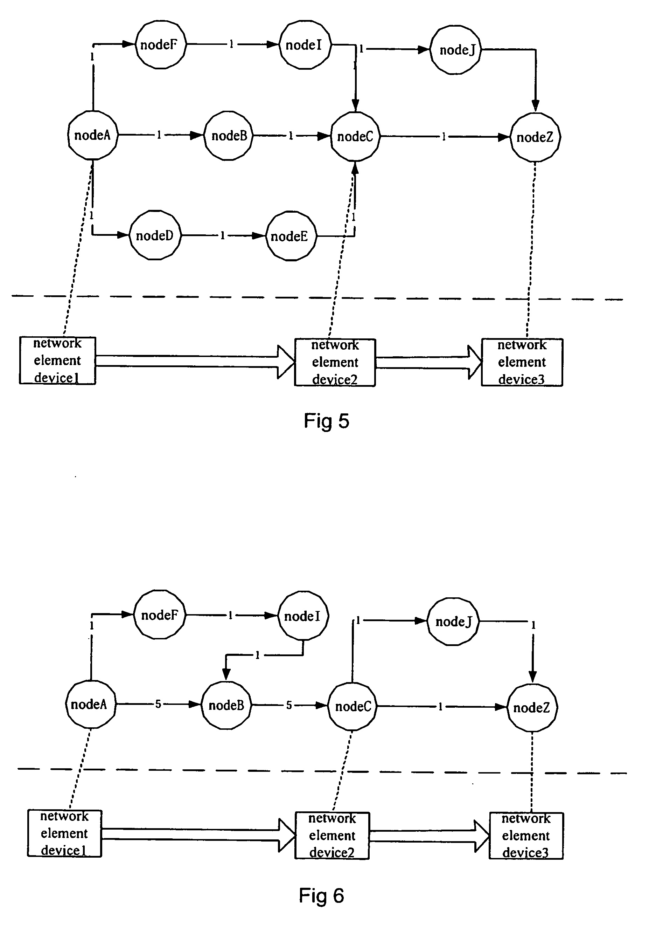

Currently, there are many diversity route algorithms and constraint routing algorithms and they can be selected according to optimization purposes. An improved Dijkstra algorithm as shown in Fig 4 can also be employed to calculate the explicit route. As shown in Fig 5, first, the connection overhead of all the control nodes are set to 1, then a path A-B-C with least number of hops can be easily obtained by using the improved Dijkstra algorithm. Then the connection overhead of the nodes that have been selected is set to a larger number (such as 5) and the improved Dijkstra algorithm is performed again to obtain another path A-D-E-C that has minimum link dependency with the foregoing path. Essentially, to select path A-F-I-C is the same as to select path A-D-E-C, here, only the case in which path A-D-E-C is selected will be discussed. In the invention, the connection overhead of the nodes that have been used is set to a larger value (rather than deleting them), the advantage is that in case a path that is fully link independent could not be found, partial route overlap is permitted. This case is shown in Fig 6, under certain special network topology conditions, such as the BC segment is overlapping, to avoid a failure occurs when search is performed by the algorithm, A-F-I-B-C can be selected as another route based on link overhead change instead of deleting the segment, of course, this is a tradeoff made due to the signaling network topology is limited.

After obtaining the explicit route, source control node A generates two IP data packets that have same signaling content, and adds two related identifiers (X, Y1) and (X, Y2) into the data field of the header respectively, wherein X represents the sequence number of the data packet, it may take the form of a serial number; number 1, 2 represents the first and second portion of a same data packet X. The explicit routes carried by the IP header are A-B-C and A-D-E-C, respectively. The signaling routing means of control node A finds the corresponding output port based on the explicit routes and sends the IP data packet to control node B and control node D, respectively. In order to facilitate the next node to obtain correct information, control node A shifts the pointer indication of the explicit routes and obtains explicit routes B-C-A and D-E-C-A respectively, and they are sent along with the IP data packet to control node B and control node D, respectively. When control node B and control node D have received the data packet, after looking up the corresponding output port based on the explicit routes, they shift the explicit routes again to obtain C-A-B and E-C-A-D respectively, which in turn are forwarded with the IP data packet to the next control node C and control node E respectively, until each arrives destination control node C, now the explicit routes have completed a full loop shift.

Under normal condition, after passing different explicit routes, the two IP signaling packets sent by control node A will each arrives destination control node C normally. The destination control node C performs priority selecting on the IP signaling packets, in the present embodiment, the priority selecting policy is to select the IP signaling packet that comes first, the signaling routing means in the destination control node C resolves the received IP signaling packet, forwards the signaling to other service processing modules to be processed by them, and preserves the identifier (ID) of the IP data packet or a copy of it. When the second portion of signaling data packet with same content arrives, after confirming that the signaling content is the same (by comparing the identifier or the copy), that signaling data packet and the preserved identifier (ID) of the IP data packet or the copy are discarded.

According to the above method, if a failure occurs on route A-B-C, the signaling data packet transferred on route A-D-E-C will not be affected. Similarly, a failure on route A-D-E-C will also not affect the transmission of signaling data on route A-B-C. For the explicit route between control node A and control node C, two explicit routes are calculated in the present embodiment, in practice, based on actual needs, more than two signaling routes with minimum link dependency can be used to perform forwarding, the processing mechanism of which is the same as that of the above two explicit routes.

The OSPF routing protocol has certain network self-healing feature, and can re-modify the transmission reliability of signaling between control nodes based on real time state of the network. If a failure occurs at control node B on route A-B-C, and the failure is not eliminated in certain time (for example, the network self-healing time of the OSPF protocol typically is 60 seconds), then the source control node calculates the explicit route again by using diversity route algorithm based on the refreshed network topology, at this time, route A-F-I-C can be re-selected as another new second route.

The process to establish a connection between network element device 2 and network element device 3 is similar to the above process of establishing a connection between network element device 1 and network element device 2, two explicit routes C-Z and C-J-Z are obtained between control node C and control node Z corresponded to network element device 2 and network element device 3 to perform transmission and forwarding of signaling.

Finally, it should be noted that the above embodiments are merely to illustrate the technical solution of the present invention and are not intended to limit the invention. Although the present invention has been described in detail with reference to preferred embodiments, those ordinary skilled in the art should appreciate that modification or equivalent substitution can be made to the technical solution of the invention without departing from the scope of the invention, which should be covered in the claims of the invention.

## Claims

1. An apparatus for routing signaling information between control nodes in an optical network, comprising:
- a signaling route maintaining unit,
- a signaling packet switching unit and
- a control node interface;
said signaling route maintaining unit is operable
- for maintaining link state information of the network,
- for monitoring a link,
- for spreading network topology information,
- for updating the network topology information,
- for calculating explicit routes to form an explicit route table, wherein the explicit route table records at least two explicit routes with minimum link dependency between any two of the control nodes, and
- for forming signaling information data packets according to each explicit route;
said signaling packet switching unit is operable
- for resolving each explicit route of a signaling information data packet,
- for looking up a mapping relationship of a route port according to the explicit route, and
- for forwarding the signaling information data packet to the route port based on the explicit route;
said control node interface is operable
- for sending concurrent signaling information generated at a source control node to said signaling route maintaining unit to form concurrent signaling information data packets,
- for receiving signaling information data packets from a signaling packet switching unit of another apparatus for routing signaling information,
- for selecting a signaling information data packet according to a receiving condition, and
- for sending the selected signaling information data packet to a destination control node for processing.

2. The apparatus for routing signaling information in an optical network according to claim 1, wherein said signaling route maintaining unit includes a link state monitoring and spreading module, a network topology repository, an explicit route calculating module and an explicit route table; wherein
said link state monitoring and spreading module is operable for maintaining link state of the network, monitoring network link, spreading network topology information, updating network topology and writing the network topology into said network topology repository;
said explicit route calculating module is configured to calculate explicit route and write the calculated route result into said explicit route table.

3. The apparatus for routing signaling information in an optical network according to claim 2, wherein said link state monitoring and spreading module utilizes OSPF link state protocol.

4. The apparatus for routing signaling information in an optical network according to claim 1 or 2, wherein said signaling route maintaining unit calculates the explicit route by using a diversity route algorithm or a constrained routing algorithm, generates the explicit route table at any control node, records at least two routes with minimum link dependence between that control node and the other control nodes in the network; and the format of said explicit route table is a standard explicit route, i.e. <source, next hop point, next hop point , ......, destination, overhead>, and is recorded in source control node.

5. The apparatus for routing signaling information in an optical network according to claim 4, wherein the steps of calculating the explicit route by said signaling route maintaining unit are:
performing a search forward Dijkstra algorithm on each source control node that has signaling information to send,
calculating explicit route from the signaling network image collected from the Link State Packet gathered by that source control node,
maintaining two tables: a probation table and a verification table, each table has a plurality of records therein, the format of which is <next hop point, ..., destination, overhead>, and
obtaining two explicit routes by performing search and calculation twice, when local node is a source control node, the final verification route table just records therein routing addresses of all the control nodes that have been passed between the source and the potential destination control node.

6. The apparatus for routing signaling information in an optical network according to claim 1, wherein said signaling packet switching unit comprises an explicit route forwarding module and a route port mapping table, wherein
said explicit route forwarding module is operable for resolving route of a signaling information data packet, looking up said route port mapping table and forwarding the signaling information data packet.

7. The apparatus for routing signaling information in an optical network according to claim 1, wherein the header address field of said signaling information data packet carries therewith the explicit route calculated by the source control node, begin from the source control node, the control node interface performs concurrently sending of signaling information data packets, each node that receives the signaling information data packet queries the explicit route of the header; if what is indicated by the current address is not a destination address, then it is mapped to a corresponding device port based on the address of the next hop point indicated in the signaling information data packet to perform transmitting, and the address of the next hop point that indicates the current control node is moved by one pointer position; if the current address is a destination address, then the signaling information data packet is handed over to a local control node interface to perform priority receiving.

8. An optical network, comprising a transport plane, a control plane and a management plane; wherein
said transport plane comprises a plurality of network element devices and is configured to provide unidirectional or bi-directional transportation of end-to-end user information;
said control plane comprises a plurality of control nodes, and said control nodes are configured to control signaling information and routing of corresponding transport plane and perform operations of establishing and deleting connection;
wherein said control node further comprises therein an apparatus for routing signaling information according to any one of claims 1 to 7, wherein
the apparatus for routing signaling information provides transport channel of signaling information for the control node and is configured to calculate explicit route and perform packet forwarding for communication signaling information; and the apparatus for routing signaling information within said control nodes form a signaling control platform, and the signaling information between said control nodes is transported in the form of signaling information data packet.

9. A method for routing signaling information between control nodes in an optical network, wherein each control node of said optical network is provided with an apparatus for routing signaling information, which forms an independent signaling network, and said method comprises the steps of:
step 1, obtaining link state information between control nodes and spreading the link state information to each control node;
step 2, calculating at a source control node at least two explicit routes with minimum link dependency between any two of the control nodes;
step 3, packing, by the source control node, the signaling information to be transported into at least two signaling information data packets simultaneously based on the explicit routes and sending the signaling information data packets out according to different routes;
step 4, after receiving the signaling information data packets, looking up, by an intermediate control node, corresponding output port based on the explicit routes carried by the signaling information data packets, and forwarding the signaling information data packets to the output port;
step 5, selecting, by a destination control node, one of the signaling information data packets based on receiving condition of the signaling information data packets, discarding duplicated signaling information data packet, and solving out the signaling information within the signaling information data packet.

10. The method for routing signaling information in an optical network according to claim 9, wherein said step 1 of obtaining link state information between control nodes further comprising: configuring the apparatus for routing signaling information in each control node with an unique communication address of signaling network; configuring a listing of respective control nodes and adjacent control nodes via an interface, including the link overhead between nodes.

11. The method for routing signaling information in an optical network according to claim 10, wherein said listing of control nodes can also be configured with an auto-discovering feature.

12. The method for routing signaling information in an optical network according to claim 9, wherein said step 2 of calculating explicit routes further comprising: using a search forward Dijkstra algorithm or other constrained routing algorithms by each source control node that has signaling information to send to calculate explicit route from the network topology collected from the Link State Packet gathered by that source control node, a probation table and a verification table are involved during calculation; obtaining two explicit routes by performing search and calculation twice, when local node is a source control node, the final verification table just records therein routing addresses of all the control nodes that have been passed between the source and the potential destination control node; recording explicit route table in the source control node.

13. The method for routing signaling information in an optical network according to claim 12, wherein said step of calculating explicit routes is:
1) initializing the verification table by the source control node, wherein link overhead is 0;
2) examining the Link State Packet of the source control node, and the node that has been newly added into the verification table is called a Next node;
3) calculating the total overhead from the source control node to the Next node and from the Next node to the adjacent nodes;
4) determining whether the adjacent nodes are in the probation table, if so, then goes to step 5); if the adjacent nodes are not in the probation table, then adding record <next hop point..., adjacent nodes, overhead> into the probation table; going to step 6);
5) determining whether the above overhead is lower than the current record in the probation table, if yes, then the current record is replaced by the record <next hop point..., adjacent nodes, overhead>; if the overhead is not less than the current record, then the current record is preserved;
6) determining whether the probation table is empty, if not empty, then the record with least overhead in the probation table is selected and moved into the verification table, then goes to step 2); if the probation table is empty, then the full route from the source control node to the destination control node is outputted;
7) determining whether all the routes have been calculated, if so, the process to calculate explicit route is ended; if not, the overhead of the link between the control nodes that have been selected is increased, and the process returns to step 1).

14. The method for routing signaling information in an optical network according to claim 9, wherein in said step 3, the header content of the two signaling information data packets are different, including the explicit routes carried by the header address field are different and the identifiers (IDs) in the data field are different, wherein the identifier (ID) can be denoted as (X, Y1) and (X, Y2), wherein X represents the sequence number of the signaling information data packet, it may be a serial number; Y1, Y2 represents the first and second portion of a same signaling information data packet X.

15. The method for routing signaling information in an optical network according to claim 9, wherein said step 4 of forwarding signaling information data packets further comprising: the control node that has received a signaling information data packet queries the explicit route carried by the header address field of the packet; if what is indicated by the current address is not a destination address, i.e., the current control node is not a destination control node, then it is mapped to a corresponding output port based on the address of the next hop point indicated in the explicit route and sends the signaling information data packet out, at the same time, the address of the next hop point that indicates the current control node is moved by one pointer position.

16. The method for routing signaling information in an optical network according to claim 15, wherein, after said control node has found the corresponding output port based on the explicit route, it shifts the pointer indication of the explicit route and transmits the shifted explicit route along with the signaling information data packet to a next node.

17. The method for routing signaling information in an optical network according to claim 9, wherein in said step 5, the policy for a destination control node to select a signaling information data packet is to select a signaling information data packet with good quality, or select a signaling information data packet that arrives first based on the sequence of arrival.

## Patentansprüche

1. Vorrichtung für das Routing (Leitweglenken) von Signalisierungsinformationen zwischen Steuerknoten in einem optischen Netz, mit:
- einer Signalisierungsleitweg-Aufrechterhaltungseinheit,
- einer Signalisierungspaketvermittlungseinheit und
- einer Steuerknotenschnittstelle;
wobei die Signalisierungsleitweg-Aufrechterhaltungseinheit betreibbar ist
- zum Halten von Verbindungszustandsinformationen des Netzes,
- zum Überwachen einer Verbindung,
- zum Verbreiten von Netztopologieinformationen,
- zum Aktualisieren der Netztopologieinformationen,
- zum Berechnen von expliziten Leitwegen, um eine explizite Leitweg-Tabelle zu bilden, wobei die explizite Leitweg-Tabelle wenigstens zwei explizite Leitwege mit einer minimalen Verbindungsabhängigkeit zwischen irgendwelchen zwei der Steuerknoten aufzeichnet, und
- zum Bilden von Signalisierungsinformationsdatenpaketen entsprechend jedem expliziten Leitweg;
wobei die Signalisierungspaketvermittlungseinheit betreibbar ist
- zum Auflösen jedes expliziten Leitwegs eines Signalisierungsinformationsdatenpakets,
- zum Nachschlagen einer Abbildungsbeziehung eines Leitweg-Ports entsprechend dem expliziten Leitweg und
- zum Weiterleiten des Signalisierungsinformationsdatenpakets zu dem Leitweg-Port auf der Basis des expliziten Leitwegs;
wobei die Steuerknotenschnittstelle betreibbar ist
- zum Senden von gleichzeitigen Signalisierungsinformationen, die an einem Quellsteuerknoten erzeugt worden sind, zu der Signalisierungsleitweg-Aufrechterhaltungseinheit, um gleichzeitige Signalisierungsinformationsdatenpakete zu bilden,
- zum Empfangen von Signalisierungsinformationsdatenpaketen von einer Signalisierungspaketvermittlungseinheit einer anderen Vorrichtung für das Routing von Signalisierungsinformationen,
- zum Auswählen eines Signalisierungsinformationsdatenpakets entsprechend einer Empfangsbedingung und
- zum Senden des ausgewählten Signalisierungsinformationsdatenpakets zu einem Zielsteuerknoten für die Verarbeitung.

2. Vorrichtung für das Routing von Signalisierungsinformationen in einem optischen Netz nach Anspruch 1, wobei die Signalisierungsleitweg-Aufrechterhaltungseinheit ein Verbindungszustandsüberwachungs- und
- verbreitungsmodul, ein Netztopologierepositorium, ein Modul zur Berechnung eines expliziten Leitwegs und eine explizite Leitweg-Tabelle umfasst; wobei
das Verbindungszustandsüberwachungs- und -verbreitungsmodul betreibbar ist zum Aufrechterhalten des Verbindungszustands des Netzes, zum Überwachen einer Netzverbindung, zum Verbreiten von Netztopologieinformationen, zum Aktualisieren der Netztopologie und zum Schreiben der Netztopologie in das Netztopologierepositorium;
wobei das Modul zur Berechnung eines expliziten Leitwegs so konfiguriert ist, dass es einen expliziten Leitweg berechnet und das Ergebnis des berechneten Leitwegs in die explizite Leitweg-Tabelle schreibt.

3. Vorrichtung für das Routing von Signalisierungsinformationen in einem optischen Netz nach Anspruch 2, wobei das Verbindungszustandsüberwachungsund -verbreitungsmodul das OSPF-Verbindungszustandsprotokoll verwendet.

4. Vorrichtung für das Routing von Signalisierungsinformationen in einem optischen Netz nach Anspruch 1 oder 2, wobei die Signalisierungsleitweg-Aufrechterhaltungseinheit den expliziten Leitweg durch das Verwenden eines Diversity-Leitweg-Algorithmus oder eines beschränkten Routing-Algorithmus berechnet, die explizite Leitweg-Tabelle an irgendeinem Steuerknoten erzeugt, wenigstens zwei Leitwege mit minimaler Verbindungsabhängigkeit zwischen diesem Steuerknoten und den anderen Steuerknoten in dem Netz aufzeichnet; und wobei das Format der expliziten Leitweg-Tabelle ein standardmäßiger expliziter Leitweg ist, d.h. <Quelle, nächster Sprungpunkt, nächster Sprungpunkt, ... ..., Ziel, Overhead> (<source, next hop point, next hop point, ... ..., destination, overhead>), und in dem Quellsteuerknoten aufgezeichnet wird.

5. Vorrichtung für das Routing von Signalisierungsinformationen in einem optischen Netz nach Anspruch 4, wobei die Schritte des Berechnens des expliziten Leitwegs durch die Signalisierungsleitweg-Aufrechterhaltungseinheit folgende Schritte sind:
Durchführen eines Vorwärtssuch-Dijkstra-Algorithmus bei jedem Quellsteuerknoten, der Signalisierungsinformationen zu senden hat,
Berechnen des expliziten Leitwegs aus dem Signalisierungsnetzbild, das aus dem Verbindungszustandspaket beschafft worden ist, das von diesem Quellsteuerknoten erfasst worden ist,
Halten von zwei Tabellen: einer Eignungsprüfungstabelle und einer Verifikationstabelle, wobei jede Tabelle eine Vielzahl von Aufzeichnungen darin aufweist, wobei das Format davon <nächster Sprungpunkt, ..., Ziel, Overhead> (<next hop point, ..., destination, overhead>) ist, und
Erhalten von zwei expliziten Leitwegen durch das zweimalige Durchführen der Suche und der Berechnung, wobei wenn der lokale Knoten ein Quellsteuerknoten ist, die endgültige Verifikationsleitwegtabelle darin nur Routing-Adressen von all den Steuerknoten aufzeichnet, die zwischen der Quelle und dem potentiellen Zielsteuerknoten passiert worden sind.

6. Vorrichtung für das Routing von Signalisierungsinformationen in einem optischen Netz nach Anspruch 1,
wobei die Signalisierungspaketvermittlungseinheit ein explizites Leitweg-Weiterleitungsmodul und eine Leitweg-Port-Abbildungstabelle aufweist, wobei das explizite Leitweg-Weiterleitungsmodul betreibbar ist zum Auflösen eines Leitwegs eines Signalisierungsinformationsdatenpakets, zum Nachschlagen der Leitweg-Port-Abbildungstabelle und zum Weiterleiten des Signalisierungsinformationsdatenpakets.

7. Vorrichtung für das Routing von Signalisierungsinformationen in einem optischen Netz nach Anspruch 1, wobei das Header/(Kopf)-Adressfeld des Signalisierungsinformationsdatenpakets den expliziten Leitweg mitführt, der von dem Quellsteuerknoten berechnet worden ist, mit Beginn ausgehend von dem Quellsteuerknoten, die Steuerknotenschnittstelle ein gleichzeitiges Senden von Signalisierungsinformationsdatenpaketen durchführt, jeder Knoten, der das Signalisierungsinformationsdatenpaket empfängt, den expliziten Leitweg von dem Header abfragt; wobei dann, wenn es sich bei dem, was von der aktuellen Adresse angegeben wird, nicht um eine Zieladresse handelt, eine Abbildung zu einem entsprechenden Vorrichtungs-Port auf der Basis der Adresse des nächsten Sprungpunkts durchgeführt wird, der in dem Signalisierungsinformationsdatenpaket angegeben ist, um das Übertragen durchzuführen, und die Adresse des nächsten Sprungpunkts, die den aktuellen Steuerknoten angibt, um eine Zeigerposition verschoben wird; wobei dann, wenn die aktuelle Adresse eine Zieladresse ist, das Signalisierungsinformationsdatenpaket an eine lokale Steuerknotenschnittstelle übergeben wird, um ein Prioritätsempfangen durchzuführen.

8. Optisches Netz, das eine Transportebene, eine Steuerebene und eine Verwaltungsebene aufweist; wobei
die Transportebene eine Vielzahl von Netzelementeinrichtungen aufweist und so konfiguriert ist, dass sie einen unidirektionalen oder bidirektionalen Transport von Benutzerinformationen von einem Ende zum anderen Ende vorsieht;
die Steuerebene eine Vielzahl von Steuerknoten aufweist, und die Steuerknoten so konfiguriert sind, dass sie das Signalisieren von Informationen und das Routing der entsprechenden Transportebene steuern und Operationen des Herstellens und Löschens einer Verbindung durchführen;
wobei der Steuerknoten des Weiteren darin eine Vorrichtung für das Routing von Signalisierungsinformationen nach einem der Ansprüche 1 bis 7 aufweist, wobei
die Vorrichtung für das Routing von Signalisierungsinformationen einen Transportkanal von Signalisierungsinformationen für den Steuerknoten bereitstellt und so konfiguriert ist, dass sie einen expliziten Leitweg berechnet und eine Paketweiterleitung für die Kommunikation von Signalisierungsinformationen durchführt; und die Vorrichtungen für das Routing von Signalisierungsinformationen innerhalb der Steuerknoten eine Signalisierungssteuerungsplattform bilden, und die Signalisierungsinformationen zwischen den Steuerknoten in der Form eines Signalisierungsinformationsdatenpakets transportiert werden.

9. Verfahren für das Routing von Signalisierungsinformationen zwischen Steuerknoten in einem optischen Netz, wobei jeder Steuerknoten des optischen Netzes mit einer Vorrichtung für das Routing von Signalisierungsinformationen versehen ist, wodurch ein unabhängiges Signalisierungsnetz gebildet wird, und wobei das Verfahren die folgenden Schritte umfasst:
Schritt 1, Erhalten von Verbindungszustandsinformationen zwischen Steuerknoten und Verbreiten der Verbindungszustandsinformationen zu jedem Steuerknoten;
Schritt 2, Berechnen, an einem Quellsteuerknoten, von wenigstens zwei expliziten Leitwegen mit einer minimalen Verbindungsabhängigkeit zwischen irgendwelchen zwei der Steuerknoten;
Schritt 3, Packen, durch den Quellsteuerknoten, der Signalisierungsinformationen, die transportiert werden sollen, in wenigstens zwei Signalisierungsinformationsdatenpakete gleichzeitig auf der Basis der expliziten Leitwege und
Hinaussenden der Signalisierungsinformationsdatenpakete entsprechend unterschiedlichen Leitwegen;
Schritt 4, nach dem Empfangen der Signalisierungsinformationsdatenpakete das Nachschlagen, durch einen dazwischen liegenden Steuerknoten, eines entsprechenden Ausgabeports auf der Basis der expliziten Leitwege, die von den Signalisierungsinformationsdatenpaketen mitgeführt werden, und Weiterleiten der Signalisierungsinformationsdatenpakete zu dem Ausgabeport;
Schritt 5, Auswählen, durch einen Zielsteuerknoten, eines der Signalisierungsinformationsdatenpakete auf der Basis einer Empfangsbedingung der Signalisierungsinformationsdatenpakete, Verwerfen eines duplizierten Signalisierungsinformationsdatenpakets, und Auslösen der Signalisierungsinformationen innerhalb des Signalisierungsinformationsdatenpakets.

10. Verfahren für das Routing von Signalisierungsinformationen in einem optischen Netz nach Anspruch 9, wobei der Schritt 1 des Erhaltens von Verbindungszustandsinformationen zwischen Steuerknoten des Weiteren Folgendes umfasst:
Konfigurieren der Vorrichtung für das Routing von Signalisierungsinformationen in jedem Steuerknoten mit einer eindeutigen Kommunikationsadresse des Signalisierungsnetzes; Konfigurieren einer Auflistung von jeweiligen Steuerknoten und von benachbarten Steuerknoten über eine Schnittstelle, einschließlich des Verbindungs-Overhead zwischen Knoten.

11. Verfahren für das Routing von Signalisierungsinformationen in einem optischen Netz nach Anspruch 10, wobei die Auflistung von Steuerknoten auch mit einem Selbstentdeckungsmerkmal konfiguriert sein kann.

12. Verfahren für das Routing von Signalisierungsinformationen in einem optischen Netz nach Anspruch 9, wobei der Schritt 2 des Berechnens von expliziten Leitwegen des Weiteren Folgendes umfasst: Verwenden eines Vorwärtssuch-Dijkstra-Algorithmus oder von anderen beschränkten Routing-Algorithmen durch jeden Quellsteuerknoten, der Signalisierungsinformationen zu senden hat, um einen expliziten Leitweg aus der Netztopologie zu berechnen, die aus dem Verbindungszustandspaket beschafft worden ist, das von diesem Quellsteuerknoten erfasst worden ist, wobei eine Eignungsprüfungstabelle und eine Verifikationstabelle bei der Berechnung beteiligt sind; Erhalten von zwei expliziten Leitwegen durch das zweimalige Durchführen einer Suche und einer Berechnung, wobei wenn ein lokaler Knoten ein Quellsteuerknoten ist, die endgültige Verifikationstabelle darin nur Routing-Adressen all der Steuerknoten aufzeichnet, die zwischen der Quelle und dem potentiellen Zielsteuerknoten passiert worden sind; Aufzeichnen einer expliziten Leitweg-Tabelle in dem Quellsteuerknoten.

13. Verfahren für das Routing von Signalisierungsinformationen in einem optischen Netz nach Anspruch 12, wobei der Schritt des Berechnens von expliziten Leitwegen folgendermaßen ist:
1) Initialisieren der Verifikationstabelle durch den Quellsteuerknoten, wobei der Verbindungs-Overhead 0 ist;
2) Prüfen des Verbindungszustandspakets des Quellsteuerknotens, und der Knoten, der neu zu der Verifikationstabelle hinzugefügt worden ist, wird ein Nächster Knoten genannt;
3) Berechnen des gesamten Overhead von dem Quellsteuerknoten zu dem Nächsten Knoten und von dem Nächsten Knoten zu den benachbarten Knoten:
4) Feststellen, ob sich die benachbarten Knoten in der Eignungsprüfungstabelle befinden, und wenn dem so ist, dann Gehen zum Schritt 5); wenn sich die benachbarten Knoten nicht in der Eignungsprüfungstabelle befinden, dann Hinzufügen der Aufzeichnung <nächster Sprungpunkt..., benachbarte Knoten, Overhead> (<next hop point..., adjacent nodes, overhead>) zu der Eignungsprüfungstabelle; dann Gehen zum Schritt 6);
5) Feststellen, ob der oben genannte Overhead kleiner als die aktuelle Aufzeichnung in der Eignungsprüfungstabelle ist, wobei dann, wenn ja, die aktuelle Aufzeichnung durch die Aufzeichnung <nächster Sprungpunkt..., benachbarte Knoten, Overhead> (<next hop point..., adjacent nodes, overhead>) ersetzt wird; während dann, wenn der Overhead nicht kleiner als die aktuelle Aufzeichnung ist, die aktuelle Aufzeichnung beibehalten wird;
6) Feststellen, ob die Eignungsprüfungstabelle leer ist; und wenn sie nicht leer ist, dann Auswählen der Aufzeichnung mit dem kleinsten Overhead in der Eignungsprüfungstabelle und Verschieben in die Verifikationstabelle, dann Gehen zum Schritt 2); wenn die Eignungsprüfungstabelle leer ist, dann Ausgeben des vollen Leitwegs von dem Quellsteuerknoten bis zu dem Zielsteuerknoten;
7) Feststellen, ob alle Leitwege berechnet worden sind; und wenn ja, dann Beenden des Prozesses zum Berechnen des expliziten Leitwegs; wenn nicht, dann Erhöhen des Overheads der Verbindung zwischen den Steuerknoten, die ausgewählt worden sind; und Rückkehr des Prozesses zu Schritt 1).

14. Verfahren für das Routing von Signalisierungsinformationen in einem optischen Netz nach Anspruch 9, wobei in dem Schritt 3 der Header-Inhalt der beiden Signalisierungsinformationsdatenpakete unterschiedlich ist, was einschließt, dass die expliziten Leitwege, die von dem Header-Adressfeld mitgeführt werden, unterschiedlich sind und die Kennungen (IDs) in dem Datenfeld unterschiedlich sind, wobei die Kennung (ID) als (X, Y1) und (X, Y2) bezeichnet werden kann, wobei X die Folgenummer des Signalisierungsinformationsdatenpakets repräsentiert, welche eine laufende Nummer sein kann; und Y1, Y2 den ersten und zweiten Abschnitt eines gleichen Signalisierungsinformationsdatenpakets X repräsentieren.

15. Verfahren für das Routing von Signalisierungsinformationen in einem optischen Netz nach Anspruch 9, wobei der Schritt 4 des Weiterleitens von Signalisierungsinformationsdatenpaketen des Weiteren Folgendes umfasst: der Steuerknoten, der ein Signalisierungsinformationsdatenpaket empfangen hat, fragt den expliziten Leitweg ab, der von dem Header-Adressfeld des Pakets mitgeführt wird; wenn es sich bei dem, was von der aktuellen Adresse angegeben wird, nicht um eine Zieladresse handelt, d.h. der aktuelle Steuerknoten ist kein Zielsteuerknoten, dann wird eine Abbildung auf einen entsprechenden Ausgabeport auf der Basis der Adresse des nächsten Sprungpunktes, der in dem expliziten Leitweg angegeben ist, durchgeführt und das Signalisierungsinformationsdatenpaket wird hinausgesendet, und zur gleichen Zeit wird die Adresse des nächsten Sprungpunkts, die den aktuellen Steuerknoten anzeigt, um eine Zeigerposition verschoben.

16. Verfahren für das Routing von Signalisierungsinformationen in einem optischen Netz nach Anspruch 15, wobei, nachdem der Steuerknoten den entsprechenden Ausgabeport auf Basis des expliziten Leitwegs gefunden hat, er die Zeigerangabe des expliziten Leitwegs verschiebt und den verschobenen expliziten Leitweg zusammen mit dem Signalisierungsinformationsdatenpaket zu einem nächsten Knoten überträgt.

17. Verfahren für das Routing von Signalisierungsinformationen in einem optischen Netz nach Anspruch 9, wobei in dem Schritt 5 die Taktik für einen Zielsteuerknoten zum Auswählen eines Signalinformationsdatenpakets darin besteht, ein Signalisierungsinformationsdatenpaket mit guter Qualität auszuwählen, oder ein Signalisierungsinformationsdatenpaket, das zuerst ankommt, auf der Basis der Ankunftssequenz auszuwählen.

## Revendications

1. Appareil pour acheminer des informations de signalisation entre des noeuds de commande dans un réseau optique, comprenant :
- une unité de maintien de voie d'acheminement de signalisation,
- une unité de commutation de paquets de signalisation et
- une interface de noeud de commande ;
ladite unité de maintien de voie d'acheminement de signalisation est utilisable :
- pour maintenir des informations d'état de liaison du réseau,
- pour surveiller une liaison,
- pour diffuser des informations de topologie de réseau,
- pour mettre à jour les informations de topologie de réseau,
- pour calculer des voies d'acheminement explicites pour former une table de voies d'acheminement explicites, dans lequel la table de voies d'acheminement explicites enregistre au moins deux voies d'acheminement explicites avec une dépendance de liaison minimum entre deux quelconques des noeuds de commande, et
- pour former des paquets de données d'informations de signalisation selon chaque voie d'acheminement explicite ;
ladite unité de commutation de paquets de signalisation est utilisable :
- pour résoudre chaque voie d'acheminement explicite d'un paquet de données d'informations de signalisation,
- pour consulter une relation de mappage d'un port de voie d'acheminement selon la voie d'acheminement explicite, et
- pour renvoyer le paquet de données d'informations de signalisation au port de voie d'acheminement en fonction de la voie d'acheminement explicite ;
ladite interface de noeud de commande est utilisable :
- pour envoyer des informations de signalisation simultanées générées à un noeud de commande source à ladite unité de maintien de voie d'acheminement de signalisation pour former des paquets de données d'informations de signalisation simultanés,
- pour recevoir des paquets de données d'informations de signalisation à partir d'une unité de commutation de paquets de signalisation d'un autre appareil pour acheminer des informations de signalisation,
- pour sélectionner un paquet de données d'informations de signalisation selon une condition de réception, et
- pour envoyer le paquet sélectionné de données d'informations de signalisation à un noeud de commande de destination pour le traitement.

2. Appareil pour acheminer des informations de signalisation dans un réseau optique selon la revendication 1,
dans lequel ladite unité de maintien de voie d'acheminement de signalisation comprend un module de surveillance et de diffusion d'état de liaison, un référentiel de topologie de réseau, un module de calcul de voie d'acheminement explicite et une table de voies d'acheminement explicites ; dans lequel
ledit module de surveillance et de diffusion d'état de liaison est utilisable pour maintenir un état de liaison du réseau, surveiller une liaison de réseau, diffuser des informations de topologie de réseau, mettre à jour une topologie de réseau et écrire la topologie de réseau dans ledit référentiel de topologie de réseau ;
ledit module de calcul de voie d'acheminement explicite est configuré pour calculer une voie d'acheminement explicite et écrire le résultat de voie d'acheminement calculée dans ladite table de voies d'acheminement explicites.

3. Appareil pour acheminer des informations de signalisation dans un réseau optique selon la revendication 2, dans lequel ledit module de surveillance et de diffusion d'état de liaison utilise un protocole d'état de liaison OSPF.

4. Appareil pour acheminer des informations de signalisation dans un réseau optique selon la revendication 1 ou 2, dans lequel ladite unité de maintien de voie d'acheminement de signalisation calcule la voie d'acheminement explicite en utilisant un algorithme de voie d'acheminement à diversité ou un algorithme d'acheminement contraint, génère la table de voies d'acheminement explicites à un noeud de commande quelconque, enregistre au moins deux voies d'acheminement avec une dépendance de liaison minimum entre ce noeud de commande et les autres noeuds de commande dans le réseau ; et le format de ladite table de voies d'acheminement explicites est une voie d'acheminement explicite standard, à savoir <source, point de bond suivant, point de bond suivant, ......, destination, surdébit>, et est enregistré dans le noeud de commande source.

5. Appareil pour acheminer des informations de signalisation dans un réseau optique selon la revendication 4, dans lequel les étapes consistant à calculer la voie d'acheminement explicite par l'intermédiaire de ladite unité de maintien de voie d'acheminement de signalisation sont les étapes suivantes consistant à :
réaliser un algorithme de Dijkstra de recherche avant sur chaque noeud de commande source qui possède des informations de signalisation à envoyer,
calculer une voie d'acheminement explicite à partir de l'image de réseau de signalisation collectée à partir du paquet d'état de liaison recueilli par ce noeud de commande source,
maintenir deux tables : une table de probation et une table de vérification, chaque table possède une pluralité d'enregistrements dans celle-ci, dont le format est <point de bond suivant, ..., destination, surdébit>, et
obtenir deux voies d'acheminement explicites en réalisant une recherche et un calcul deux fois, lorsque le noeud local est un noeud de commande source, la table de voies d'acheminement de vérification finale enregistre juste dans celle-ci des adresses d'acheminement de tous les noeuds de commande par lesquels il a fallu passer entre la source et le noeud de commande de destination potentiel.

6. Appareil pour acheminer des informations de signalisation dans un réseau optique selon la revendication 1,
dans lequel ladite unité de commutation de paquets de signalisation comprend un module de renvoi de voie d'acheminement explicite et une table de mappage de port de voie d'acheminement, dans lequel
ledit module de renvoi de voie d'acheminement explicite est utilisable pour résoudre une voie d'acheminement d'un paquet de données d'informations de signalisation, consulter ladite table de mappage de port de voie d'acheminement et renvoyer le paquet de données d'informations de signalisation.

7. Appareil pour acheminer des informations de signalisation dans un réseau optique selon la revendication 1, dans lequel le champ d'adresse d'entête dudit paquet de données d'informations de signalisation transporte avec lui la voie d'acheminement explicite calculée par le noeud de commande source, en commençant à partir du noeud de commande source, l'interface de noeud de commande réalise l'envoi simultané de paquets de données d'informations de signalisation, chaque noeud qui reçoit le paquet de données d'informations de signalisation interroge la voie d'acheminement explicite de l'en-tête ; si ce qui est indiqué par l'adresse actuelle n'est pas une adresse de destination, alors il est mappé à un port de dispositif correspondant en fonction de l'adresse du point de bond suivant indiqué dans le paquet de données d'informations de signalisation pour réaliser la transmission, et l'adresse du point de bond suivant qui indique le noeud de commande actuel est déplacée selon une position de pointeur ; si l'adresse actuelle est une adresse de destination, alors le paquet de données d'informations de signalisation est transféré à une interface de noeud de commande local pour réaliser une réception prioritaire.

8. Réseau optique, comprenant un plan de transport, un plan de commande, et un plan de gestion ; dans lequel
ledit plan de transport comprend une pluralité de dispositifs éléments de réseau et est configuré pour fournir un transport unidirectionnel ou bidirectionnel d'informations utilisateur de bout en bout ;
ledit plan de commande comprend une pluralité de noeuds de commande, et lesdits noeuds de commande sont configurés pour commander des informations de signalisation et l'acheminement d'un plan de transport correspondant et pour réaliser des opérations d'établissement et de suppression de connexion ;
dans lequel ledit noeud de commande comprend en outre, dans celui-ci, un appareil pour acheminer des informations de signalisation selon une quelconque des revendications 1 à 7, dans lequel
l'appareil pour acheminer des informations de signalisation fournit un canal de transport d'informations de signalisation pour le noeud de commande et est configuré pour calculer une voie d'acheminement explicite et réaliser un renvoi de paquet pour la communication d'informations de signalisation ; et l'appareil pour acheminer des informations de signalisation à l'intérieur desdits noeuds de commande forme une plate-forme de commande de signalisation, et les informations de signalisation entre lesdits noeuds de commande sont transportées sous forme de paquet de données d'informations de signalisation.

9. Procédé pour acheminer des informations de signalisation entre des noeuds de commande dans un réseau optique, dans lequel chaque noeud de commande dudit réseau optique est pourvu d'un appareil pour acheminer des informations de signalisation, qui forme un réseau de signalisation indépendant, et ledit procédé comprend les étapes suivantes consistant à :
étape 1, obtenir des informations d'état de liaison entre des noeuds de commande et diffuser les informations d'état de liaison à chaque noeud de commande ;
étape 2, calculer, à un noeud de commande source, au moins deux voies d'acheminement explicites avec une dépendance de liaison minimum entre deux quelconques des noeuds de commande ;
étape 3, mettre en paquet, par l'intermédiaire du noeud de commande source, les informations de signalisation destinées à être transportées dans au moins deux paquets de données d'informations de signalisation simultanément en fonction des voies d'acheminement explicites et envoyer les paquets de données d'informations de signalisation selon des voies d'acheminement différentes ;
étape 4, après avoir reçu les paquets de données d'informations de signalisation, consulter, par l'intermédiaire d'un noeud de commande intermédiaire, un port de sortie correspondant en fonction des voies d'acheminement explicites transportées par les paquets de données d'informations de signalisation, et renvoyer les paquets de données d'informations de signalisation au port de sortie ;
étape 5, sélectionner, par l'intermédiaire d'un noeud de commande de destination, un des paquets de données d'informations de signalisation en fonction d'une condition de réception des paquets de données d'informations de signalisation, éliminer un paquet de données d'informations de signalisation répété, et résoudre les informations de signalisation à l'intérieur du paquet de données d'informations de signalisation.

10. Procédé pour acheminer des informations de signalisation dans un réseau optique selon la revendication 9, dans lequel ladite étape 1 consistant à obtenir des informations d'état de liaison entre des noeuds de commande comprend en outre les étapes consistant à _{:} configurer l'appareil pour acheminer des informations de signalisation dans chaque noeud de commande avec une adresse de communication unique de réseau de signalisation ; configurer un listage de noeuds de commande respectifs et de noeuds de commande adjacents par l'intermédiaire d'une interface, y compris le surdébit de liaison entre des noeuds.

11. Procédé pour acheminer des informations de signalisation dans un réseau optique selon la revendication 10, dans lequel ledit listage de noeuds de commande peut également être configuré avec une caractéristique de découverte automatique.

12. Procédé pour acheminer des informations de signalisation dans un réseau optique selon la revendication 9, dans lequel ladite étape 2 consistant à calculer des voies d'acheminement explicites comprend en outre les étapes consistant à _{:} utiliser un algorithme de Dijkstra de recherche avant ou d'autres algorithmes d'acheminement contraints par chaque noeud de commande source qui possède des informations de signalisation à envoyer pour calculer une voie d'acheminement explicite à partir de la topologie de réseau collectée à partir du paquet d'état de liaison recueilli par ce noeud de commande source, une table de probation et une table de vérification sont impliquées durant le calcul ; obtenir deux voies d'acheminement explicites en réalisant une recherche et un calcul deux fois, lorsque le noeud local est un noeud de commande source, la table de vérification finale enregistre juste, dans celle-ci, des adresses d'acheminement de tous les noeuds de commande par lesquels il a fallu passer entre la source et le noeud de commande de destination potentiel ; enregistrer une table de voies d'acheminement explicites dans le noeud de commande source.

13. Procédé pour acheminer des informations de signalisation dans un réseau optique selon la revendication 12, dans lequel ladite étape consistant à calculer des voies d'acheminement explicites consiste à :
1) initialiser la table de vérification par l'intermédiaire du noeud de commande source, dans lequel le surdébit de liaison est 0 ;
2) examiner le paquet d'état de liaison du noeud de commande source, le noeud qui a été nouvellement ajouté dans la table de vérification étant appelé noeud suivant ;
3) calculer le surdébit total du noeud de commande source au noeud suivant et du noeud suivant aux noeuds adjacents ;
4) déterminer si les noeuds adjacents sont dans la table de probation, dans l'affirmative, alors passer à l'étape 5) ; si les noeuds adjacents ne sont pas dans la table de probation, alors ajouter l'enregistrement <point de bond suivant..., noeuds adjacents, surdébit> dans la table de probation ; passer à l'étape 6) ;
5) déterminer si le surdébit ci-dessus est inférieur à l'enregistrement actuel dans la table de probation, dans l'affirmative, alors l'enregistrement actuel est remplacé par l'enregistrement <point de bond suivant..., noeuds adjacents, surdébit> ; si le surdébit n'est pas inférieur à l'enregistrement actuel, alors l'enregistrement actuel est préservé ;
6) déterminer si la table de probation est vide, si elle n'est pas vide, alors l'enregistrement avec le surdébit le plus faible dans la table de probation est sélectionné et déplacé dans la table de vérification, alors passer à l'étape 2) ; si la table de probation est vide, alors la voie d'acheminement pleine du noeud de commande source au noeud de commande de destination est produite ;
7) déterminer si toutes les voies d'acheminement ont été calculées, dans l'affirmative, le procédé pour calculer une voie d'acheminement explicite est terminé ; sinon, le surdébit de la liaison entre les noeuds de commande qui ont été sélectionnés est augmenté, et le procédé retourne à l'étape 1).

14. Procédé pour acheminer des informations de signalisation dans un réseau optique selon la revendication 9, dans lequel, dans ladite étape 3, les contenus d'en-tête des deux paquets de données d'informations de signalisation sont différents, y compris les voies d'acheminement explicites transportées par le champ d'adresse d'en-tête qui sont différentes et les identifiants (IDs) dans le champ de données qui sont différents, dans lequel l'identifiant (ID) peut être indiqué par (X, Y1) et (X, Y2), X représentant le numéro de séquence du paquet de données d'informations de signalisation, et pouvant être un numéro de série ; Y1, Y2 représentant les première et seconde parties d'un même paquet de données d'informations de signalisation X.

15. Procédé pour acheminer des informations de signalisation dans un réseau optique selon la revendication 9, dans lequel ladite étape 4 consistant à renvoyer des paquets de données d'informations de signalisation comprend en outre les étapes suivantes : le noeud de commande qui a reçu un paquet de données d'informations de signalisation interroge la voie d'acheminement explicite transportée par le champ d'adresse d'en-tête du paquet ; si ce qui est indiqué par l'adresse actuelle n'est pas une adresse de destination, à savoir, le noeud de commande actuel n'est pas un noeud de commande de destination, alors il est mappé à un port de sortie correspondant en fonction de l'adresse du point de bond suivant indiqué dans la voie d'acheminement explicite ; et il envoie le paquet de données d'informations de signalisation et, en même temps, l'adresse du point de bond suivant qui indique le noeud de commande actuel est déplacée selon une position de pointeur.

16. Procédé pour acheminer des informations de signalisation dans un réseau optique selon la revendication 15, dans lequel, après que ledit noeud de commande a trouvé le port de sortie correspondant en fonction de la voie d'acheminement explicite, il déplace l'indication de pointeur de la voie d'acheminement explicite et transmet la voie d'acheminement explicite déplacée conjointement au paquet de données d'informations de signalisation à un noeud suivant.

17. Procédé pour acheminer des informations de signalisation dans un réseau optique selon la revendication 9, dans lequel, dans ladite étape 5, la pratique pour un noeud de commande de destination consistant à sélectionner un paquet de données d'informations de signalisation consiste à sélectionner un paquet de données d'informations de signalisation avec une bonne qualité, ou sélectionner un paquet de données d'informations de signalisation qui arrive en premier en fonction de la séquence d'arrivée.
